# FASCICULE DE BREVET EUROPEEN

(11) **EP 1 190 934 B1**
(45) Date de publication et mention de la délivrance du brevet: **03.12.2003**
(21) Numéro de dépôt: 01402433.5
(22) Date de dépôt: 21.09.2001
(51) Int. Cl.: B62D 1/10

(54) **Ensemble de direction volant, coussin central, coquille d'habillage et véhicule automobile correspondants**
Lenkeinheit mit Lenkrad, Nabenkissen und Verkleidungsschale und damit ausgerüstetes Kraftfahrzeug
Steering unit with a steering wheel, a central pad and a covering shell and automotive vehicle comprising this unit

(30) Priorité: 22.09.2000 FR 0012115
(43) Date de publication de la demande: 27.03.2002
(73) Titulaire: Faurecia Industries, 92100 Boulogne-Billancourt (FR)
(72) Inventeur: Bois, Frédérick, 90000 Belfort (FR); Prevost, Thomas, 91190 Gif sur Yvette (FR)
(74) Mandataire: Domenego, Bertrand

(56) Documents cités:
- EP-A- 0 825 089
- DE-A- 3 240 875
- DE-C- 4 328 563
- FR-A- 1 150 606
- FR-A- 2 720 709
- US-A- 4 771 650

## Description

La présente invention concerne un ensemble de direction pour véhicule automobile selon le préambule de la revendication 1.

Un tel ensemble permet un entraînement en rotation de l'arbre de direction par le volant tout en maintenant fixe le coussin central.

Un tel coussin central regroupe en général plusieurs accessoires, parmi lesquels un module à sac gonflable de sécurité, un commutateur de commande d'avertisseur sonore ainsi que d'autres organes de commande de différents équipements fonctionnels du véhicule.

Un ensemble selon le préambule de la revendication 1 est connu par exemple du document EP-825 089. Dans l'ensemble de ce document, la liaison entre l'extrémité arrière de l'arbre de direction et les deuxièmes extrémités des branches du volant est assurée par des vis. Chaque branche s'étend depuis sa deuxième extrémité axialement vers l'arrière et radialement vers l'extérieur en formant sensiblement un arc de cercle. La face avant du coussin central en regard des branches a un profil correspondant. L'ensemble de direction comprend en outre une coquille d'habillage disposée en avant du volant pour masquer l'extrémité arrière de la colonne de direction. Cette coquille d'habillage présente une face arrière qui est en regard des deuxièmes extrémités des branches et qui est sensiblement plane et transversale à l'axe longitudinal.

La liaison entre le volant et l'extrémité arrière de l'arbre de direction est visible depuis les côtés latéraux de l'ensemble de direction. On considère que cela nuit à l'aspect esthétique de l'ensemble de direction.

FR-A-1 150 606 décrit un ensemble de direction à coussin central. Les branches du volant comprennent de légers rebroussement vers l'arrière. La liaison entre les branches du volant et l'arbre de direction est visible depuis les côtés latéraux de l'ensemble de direction.

US-A-4 711 650 décrit un ensemble de direction à coussin central fixe. La liaison entre le volant et l'arbre de direction est visible latéralement.

Un but de l'invention est d'améliorer l'aspect esthétique d'un ensemble selon le préambule de la revendication 1 en limitant les possibilités qu'un observateur a de voir, depuis l'extérieur de l'ensemble, la liaison entre le volant et l'extrémité arrière de l'arbre de direction.

A cet effet, l'invention a pour objet un ensemble selon la revendication 1.

Selon des variantes, l'ensemble peut comprendre les caractéristiques des revendications dépendantes.

L'invention a également pour objet un véhicule automobile selon la revendication 5.

L'invention sera mieux comprise à la lecture de la description qui va suivre, donnée uniquement à titre d'exemple et faite en se référant aux dessins annexés, sur lesquels :
- La figure 1 est une vue partielle, schématique, latérale et partiellement en coupe d'un ensemble de direction selon l'invention,
- la figure 2 est une vue schématique en perspective du volant, du coussin central fixe et de la coquille d'habillage de l'ensemble de direction de la figure 1,

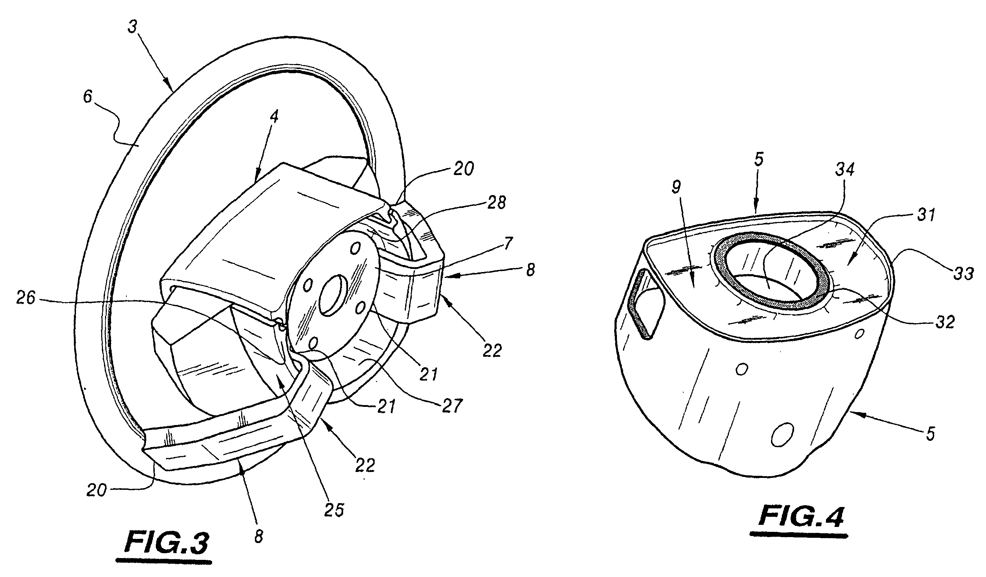

- la figure 3 est une vue schématique en perspective du volant et du coussin central fixe de l'ensemble de direction de la figure 1, et
- la figure 4 est une vue schématique en perspective de la coquille d'habillage de l'ensemble de direction de la figure 1.

Dans tout ce qui suit, les orientations utilisées sont les orientations habituelles d'un véhicule automobile. Les termes « avant » et « arrière » s'entendent donc par rapport à la position d'un conducteur.

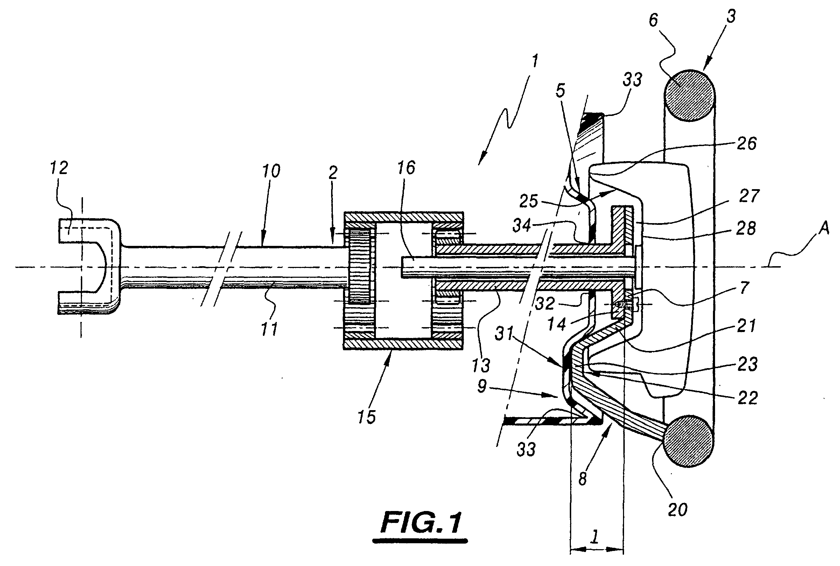

La figure 1 représente un ensemble de direction 1 d'un véhicule automobile. Cet ensemble 1 présente un axe longitudinal A et comprend une colonne de direction 2, un volant de direction 3, un coussin central fixe 4 et une coquille d'habillage 5. Le volant 3, le coussin 4 et la coquille d'habillage 5 sont montés à l'arrière de la colonne de direction 2.

Le volant 3 comprend une jante annulaire extérieure 6, un moyeu central 7 en forme de disque et des branches 8 reliant le moyeu 7 à la jante 6. Dans l'exemple représenté, les branches 8 sont au nombre de deux.

Le coussin central fixe 4 comporte de manière classique un module à sac gonflable de sécurité non représenté, ou airbag, et éventuellement un commutateur de commande d'avertisseur sonore ainsi que d'autres organes de commande de différents équipements fonctionnels du véhicule.

La coquille d'habillage 5 est une gaine ouverte à son extrémité avant et fermée à son extrémité arrière par une face arrière 9. La coquille 5 reçoit par son extrémité avant ouverte l'extrémité arrière de la colonne de direction 2 afin de la masquer. L'extrémité avant de la coquille d'habillage 5 est reçue dans un orifice ménagé dans la planche de bord (non représentée) du véhicule automobile.

La colonne de direction 2 comprend un arbre de direction 10 rotatif autour de l'axe longitudinal A. L'arbre de direction 10 comporte lui-même un tronçon avant 11 muni à son extrémité avant d'une fourche de cardan 12 reliée au reste du mécanisme de direction intégrant l'ensemble 1, et un tronçon arrière 13 à l'extrémité arrière 14 duquel le volant de direction 3 est monté grâce à son moyeu 7. Ce montage peut être assuré par exemple au moyen de vis passant dans des orifices ménagés dans le moyeu 7. Le tronçon arrière 13 de l'arbre de direction 10 traverse l'extrémité arrière de la coquille d'habillage 5.

La colonne de direction 2 comprend en outre un dispositif à engrenages 15 disposé entre les tronçons avant 11 et arrière 13 de l'arbre de direction 10, et un support fixe 16 disposé à l'intérieur du tronçon arrière 13 de l'arbre de direction 10 et à l'arrière duquel le coussin central 4 est monté. Comme précédemment, ce montage peut être assuré par exemple au moyen de vis.

L'ensemble de direction 1 est un ensemble à coussin central fixe qui, grâce au dispositif à engrenages 15 et au support fixe 16, permet de transmettre au tronçon avant 11 de l'arbre de direction 10 un mouvement de rotation du tronçon arrière 13 produit par le volant de direction 3, alors que le coussin central 4 reste fixe.

Plus particulièrement, l'ensemble 1 représenté sur la figure 1 est semblable à celui décrit dans le document EP-825 089 où de plus amples renseignements pourront être trouvés. Il est à noter que de nombreux autres types d'ensemble de direction à coussin central fixe sont connus et peuvent . donc être utilisés dans le cadre de l'invention.

Selon l'invention, chaque branche 8, qui est reliée par une première extrémité 20 à la jante 6 et par une deuxième extrémité 21 au moyeu central 7, présente un rebroussement axial 22, orienté vers l'arrière, et situé au voisinage de la deuxième extrémité 21. La longueur axiale de ce rebroussement, c'est à dire la longueur l séparant le fond 23 du rebroussement 22 de la deuxième extrémité 21 de la branche 8 considérée est d'environ 30 mm et de préférence supérieure à 15 mm.

La face avant 25 du coussin central fixe 4, qui est en regard du moyeu central 7 et des branches 8 du volant 3, comprend une jupe axiale 26 annulaire, centrée sur l'axe A et en saillie vers l'avant. Cette jupe 26 délimite dans la face avant 25 une cavité 27 circulaire qui s'étend axialement vers l'avant et qui est sensiblement centrée sur l'axe A. La cavité 27 a une profondeur axiale d'environ 25 mm et de préférence supérieure à 10 mm.

Cette cavité 27 reçoit le moyeu central 7 et les deuxièmes extrémités 21 des branches 8 du volant de direction 3. Le moyeu 7 est disposé à proximité du fond 28 de la cavité 27 et la jupe 26 s'étend axialement à l'intérieur du rebroussement 22 pratiquement jusqu'à son fond 23.

La face avant 25 du coussin central fixe 4 épouse donc sensiblement le profil des branches 8 au voisinage de leurs extrémités 21 et de leurs rebroussements 22.

Une gorge 31 orientée vers l'arrière est ménagée dans la face arrière 9 de la coquille d'habillage 5. Cette gorge 31 est sensiblement de révolution autour de l'axe A et délimite un rebord annulaire intérieur 32 et un rebord extérieur 33 qui sont en saillie vers l'arrière. Le rebord extérieur 33 est de forme sensiblement annulaire aplatie sur ses tronçons inférieur et supérieur. La profondeur axiale de la gorge 31, c'est à dire entre son fond et le rebord 33, est supérieure à 10 mm et de préférence supérieure à 5 mm.

Un orifice 34 circulaire est ménagé au centre de la face arrière 9. Cet orifice est bordé par le rebord intérieur 32 et reçoit à faible jeu le tronçon arrière 13 de l'arbre de direction 10 pour lui permettre de tourner autour de son axe longitudinal A.

Le rebord 32 est disposé dans la cavité 27 du coussin central fixe 4, axialement en arrière de l'extrémité avant de la jupe 26.

La gorge 31 reçoit les fonds 23 des rebroussements 22 des branches 8. Le rebord extérieur 33 est situé axialement en arrière de l'extrémité avant de la jupe avant 26 du coussin central 4.

Grâce à la gorge 31, la face arrière 9 de la coquille 5 épouse sensiblement le profil des branches 8-au voisinage de leurs extrémités 21 et de leurs rebroussements 22.

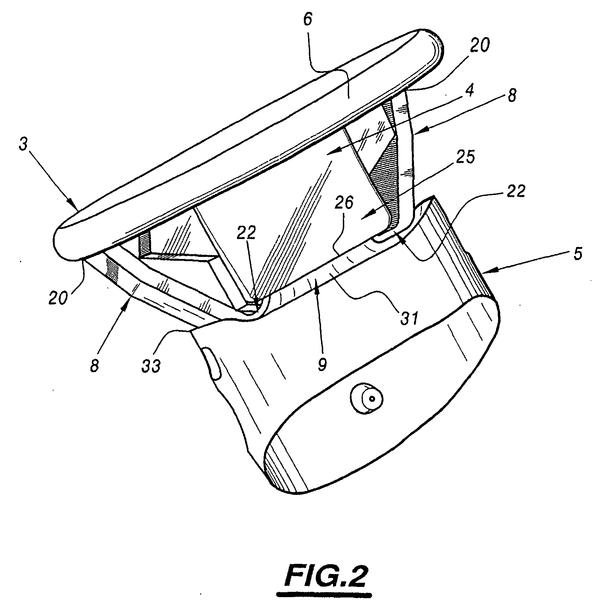

Grâce aux formes des branches 8, du coussin central 4 et de la coquille 5, la liaison entre le moyeu central 7 et l'extrémité arrière 14 de l'arbre de direction 2 n'est pas visible depuis l'extérieur de l'ensemble 1, comme on le voit sur la figure 2.

Ainsi, l'aspect esthétique de l'ensemble de direction 1 est amélioré sans ajout de pièce supplémentaire.

On notera que l'effet de masquage peut également être obtenu sans utiliser de coquille d'habillage 5 possédant une gorge 31, si l'agencement à l'intérieur de l'habitacle au voisinage du volant 3 et du coussin central 4 est tel qu'un occupant du véhicule ne peut se placer en avant de la jupe 26 du coussin central 4 pour venir regarder vers l'arrière dans la cavité 27 du coussin central 4.

## Revendications

1. Ensemble de direction (1) pour véhicule automobile comprenant :
- une colonne de direction (2) comprenant un arbre de direction (10) susceptible de tourner autour d'un axe longitudinal (A),
- un volant (3) comprenant une jante extérieure (6) et au moins une branche (8) reliée par une première extrémité (20) à la jante et par une deuxième extrémité (21) à l'extrémité arrière (14) de l'arbre de direction pour l'entraîner en rotation autour de son axe longitudinal (A),
- un coussin central fixe (4) placé sensiblement au centre du volant à l'arrière de la deuxième extrémité de la ou de chaque branche et relié à l'extrémité arrière de la colonne de direction pour être fixe en rotation lorsque l'arbre de direction (10) tourne, **caractérisé en ce que** la ou chaque branche comprend un rebroussement axial (22) vers l'arrière et le coussin central (4) comprend une jupe axiale avant sensiblement annulaire qui délimite une cavité centrale (27), la jupe (26) s'étendant axialement à l'intérieur du ou de chaque rebroussement (22) et la cavité centrale (27) recevant la deuxième extrémité (21) de la ou de chaque branche de manière à masquer la liaison entre le volant (3) et l'arbre de direction (10).

2. Ensemble selon la revendication 1, **caractérisé en ce que** le rebroussement (22) de la ou de chaque branche (8) a une longueur axiale (l) entre son fond et son extrémité radialement intérieure supérieure à environ 15 mm et la cavité centrale (27) a une profondeur axiale supérieure à environ 10 mm.

3. Ensemble selon la revendication 1 ou 2, **caractérisé en ce qu'**il comprend en outre une coquille d'habillage (5) placée à l'avant de la deuxième extrémité (21) de la ou de chaque branche pour masquer l'extrémité arrière de la colonne de direction (2), et **en ce qu'**une gorge arrière (31) sensiblement annulaire est ménagée dans la coquille (5) et le ou chaque rebroussement est reçu dans la gorge (31 ).

4. Ensemble selon l'une des revendications précédentes, **caractérisé en ce que** la gorge a une profondeur axiale supérieure à environ 5 mm.

5. Véhicule automobile, **caractérisé en ce qu'**il comprend un ensemble de direction selon l'une des revendications précédentes.

## Patentansprüche

1. Lenkbaueinheit (1) für Kraftfahrzeug, mit:
- einer Lenksäule (2), die eine Lenkwelle (10) aufweist, die sich um eine Längsachse (A) drehen kann,
- einem Lenkrad (3), das einen äußeren Lenkkranz (6) und wenigstens eine Speiche (8), die an einem ersten Ende (20) mit dem Lenkkranz und an einem zweiten Ende (21) mit dem hinteren Ende (14) der Lenkwelle verbunden ist, um diese um ihre Längsachse (A) rotatorisch anzutreiben, aufweist,
- einem festen mittigen Kissen (4), das im wesentlichen in der Mitte des Lenkrades hinter dem zweiten Ende der oder jeder Speiche angeordnet und mit dem hinteren Ende der Lenksäule drehfest verbunden ist, wenn sich die Lenkwelle (10) dreht, **dadurch gekennzeichnet, daß** jede Speiche eine axial nach hinten gerichtete Umbiegung (22) aufweist und das mittige Kissen (4) eine im wesentlichen ringförmige vordere axiale Schürze aufweist, die einen mittigen Hohlraum (27) begrenzt, wobei sich die Schürze (26) axial in die oder jede Umbiegung (22) erstreckt und der mittige Hohlraum (27) das zweite Ende (21) der oder jeder Speiche in der Weise aufnimmt, daß die Verbindung zwischen dem Lenkrad (3) und der Lenkwelle (10) verdeckt ist.

2. Baueinheit nach Anspruch 1, **dadurch gekennzeichnet, daß** die Umbiegung (22) der oder jeder Speiche (8) eine axiale Länge (l) zwischen ihrem Boden und dem radial inneren Ende besitzt, die größer als etwa 15 mm ist, und der mittige Hohlraum (27) eine axiale Tiefe besitzt, die größer als etwa 10 mm ist.

3. Baueinheit nach Anspruch 1 oder 2, **dadurch gekennzeichnet, daß** sie außerdem eine Verideidungsschale (5) aufweist, die vor dem zweiten Ende (21) der oder jeder Speiche angeordnet ist, um das hintere Ende der Lenksäule (2) zu verdecken, und daß in der Schale (5) eine im wesentlichen ringförmige hintere Nut (31) ausgespart ist und die oder jede Umbiegung in der Nut (31) aufgenommen ist.

4. Baueinheit nach einem der vorhergehenden Ansprüche, **dadurch gekennzeichnet, daß** die Nut eine axiale Tiefe besitzt, die größer als etwa 5 mm ist.

5. Kraftfahrzeug, **dadurch gekennzeichnet, daß** es eine Lenkbaueinheit nach einem der vorhergehenden Ansprüche besitzt.

## Claims

1. Steering assembly (1) for a motor vehicle, comprising:
a steering column (2) comprising a steering shaft (10) adapted to rotate about a longitudinal axis (A),
a steering wheel (3) comprising an outer rim (6) and at least one branch (8) connected by a first end (20) to the rim and by a second end (21) to the rear end (14) of the steering shaft for driving it in rotation about its longitudinal axis (A),
a central fixed pad (4) placed substantially. in the centre of the steering wheel at the rear of the second end of the or each branch and connected to the rear end of the steering column so as to be fixed in rotation when the steering shaft (10) rotates,
**characterised in that** the or each branch comprises an axial rearward return (22) and the central pad (4) comprises a substantially annular front axial skirt which delimits a central cavity (27), the skirt (26) extending axially inside the or each return (22) and the central cavity (27) receiving the second end (21) of the or each branch so as to conceal the connection between the steering wheel (3) and the steering shaft (10).

2. Assembly according to claim 1, **characterised in that** the return (22) of the or each branch (8) has an axial length (l) between its base and its radially inner end greater than about 15 mm and the central cavity (27) has an axial depth greater than about 10 mm.

3. Assembly according to claim 1 or 2, **characterised in that** it further comprises a cladding bush (5) placed at the front of the second end (21) of the or each branch in order to conceal the rear end of the steering column (2), and **in that** a substantially annular rear groove (31) is provided in the bush (5) and the or each return is accommodated in the groove (31),

4. Assembly according to one of the preceding claims, **characterised in that** the groove has an axial depth greater than about 5 mm.

5. Motor vehicle, **characterised in that** it comprises a steering assembly according to one of the preceding claims.
